# EUROPEAN PATENT APPLICATION

(11) **EP 1 911 772 A1**
(43) Date of publication of application: **16.04.2008**
(21) Application number: 06782069.6
(22) Date of filing: 01.08.2006
(51) Int. Cl.: C08F 2/44, C08F 2/24, C08F 259/08, C09D 5/02, C09D 127/04, C09D 127/16, C09D 127/18, C09D 127/20, C09D 133/04, C09D 151/06, C09D 201/04

(54) **PROCESS FOR PRODUCING AQUEOUS DISPERSION OF COMPOSITE FLUOROPOLYMER PARTICLE, AQUEOUS DISPERSION, AND COMPOSITE POLYMER PARTICLE**

(30) Priority: 04.08.2005 JP 2005226316
(71) Applicant: DAIKIN INDUSTRIES, LTD., Osaka-shi, Osaka 530-8323 (JP)
(72) Inventor: IMOTO, Katsuhiko, c/o Yodogawa-seisakusho, Settsu-shi, Osaka 566-8585 (JP); FUWA, Tsunehiko, c/o Yodogawa-seisakusho, Settsu-shi, Osaka 566-8585 (JP)
(74) Representative: Goddar, Heinz J.
(86) International application number: PCT/JP2006/315191
(87) International publication number: WO 2007/015477

(57) **Abstract**

There is provided an aqueous dispersion comprising fluorine-containing composite polymer particles which, even when an amount of a fluorine-containing polymer is smaller than that of conventional fluorine-containing polymer, makes it possible to obtain characteristics of the fluorine-containing polymer equal to or superior to those of conventional fluorine-containing polymer, and a process for preparing the aqueous dispersion. The process, which is used for preparing an aqueous dispersion comprising fluorine-containing composite polymer particles, is **characterized by** subjecting the polymer solution obtained by dissolving the fluorine-containing polymer (A) in the monomer (b) having an ethylenically unsaturated group to emulsion polymerization.

## Description

### TECHNICAL FIELD

The present invention relates to an aqueous dispersion of fluorine-containing composite polymer particles having a high surface fluorine content, a preparation process thereof, and the fluorine-containing composite polymer particles contained therein.

### BACKGROUND ART

A process for preparing composite particles by seed-polymerizing a monomer having an ethylenically unsaturated group such as an acrylic monomer with fluorine-containing polymer particles prepared by emulsion polymerization (JP62-32102A, etc.) and a process of emulsion blend in which an emulsion of a fluorine-containing polymer and an emulsion of an acrylic polymer are subjected to mixing and then coagulation (WO96/17890, etc.) have been known so far as a process for preparing an aqueous dispersion of a composite fluorine-containing polymer.

However, in the process of seed-polymerization, since the seed particles are fluorine-containing polymer particles, a proportion of the acrylic polymer inevitably increases on the surface of the composite particles, and therefore characteristics of the fluorine-containing polymer are hardly exhibited.

On the other hand, in the process of emulsion blend, it is only a simply homogeneous blend that can be prepared.

Fluorine-containing polymers are expensive as compared with other general purpose resins, and therefore it is desired to reduce an amount thereof.

### DISCLOSURE OF INVENTION

An object of the present invention is to provide an aqueous dispersion of fluorine-containing composite polymer particles which makes it possible to obtain characteristics of a fluorine-containing polymer being not less excellent than those of the above-mentioned conventional fluorine-containing composite polymer by using the fluorine-containing polymer in an amount smaller than that of the above-mentioned conventional fluorine-containing composite polymer, and a process for preparation thereof.

The present inventors have made experiments for preparing an aqueous dispersion of fluorine-containing composite polymer by changing polymerization conditions in the above-mentioned seed polymerization but could not decrease a proportion of the fluorine-containing polymer without lowering characteristics of the fluorine-containing polymer.

However when a fluorine-containing polymer is dissolved in an acrylic monomer which has good compatibility with the fluorine-containing polymer and is widely used for seed polymerization, and this fluorine-containing polymer solution is subjected to emulsion polymerization, unexpectedly it was found that the dissolved fluorine-containing polymer is locally present on the surface of the obtained composite polymer particles, which explodes a common anticipation that homogeneously distributed particles of the both compatible with each other are obtained. Thus the present invention has been completed.

Namely, the present invention relates to a process for preparing an aqueous dispersion of fluorine-containing composite polymer particles, which is characterized in that a polymer solution obtained by dissolving a fluorine-containing polymer (A) in a monomer (b) having an ethylenically unsaturated group is subjected to emulsion polymerization.

In the present invention, it is preferable that the fluorine-containing polymer (A) has, as a structural unit, at least one kind of a fluoroolefin unit selected from the group consisting of a tetrafluoroethylene unit, a hexafluoropropylene unit, a chlorotrifluoroethylene unit and a vinylidene fluoride unit.

Also it is preferable that the monomer (b) having an ethylenically unsaturated group comprises at least one kind of an acrylic monomer or a methacrylic monomer.

A concentration of the fluorine-containing polymer in the above-mentioned polymer solution is preferably not less than 1 % by mass and not more than 90 % by mass.

When the concentration of the fluorine-containing polymer is high, it is preferable to carry out the above-mentioned emulsion polymerization in the presence of an emulsifying agent at least containing a reactive emulsifying agent.

The present invention also relates to an aqueous dispersion obtained by the above-mentioned preparation process. The aqueous dispersion contains fluorine-containing composite polymer particles comprising the fluorine-containing polymer (A) and the ethylenic polymer (B) obtained by polymerizing the monomer (b) having an ethylenically unsaturated group, in which a fluorine content of a surface of the particles is 1.1 times the theoretical fluorine content or more.

The present invention also relates to an aqueous coating composition comprising the above-mentioned aqueous dispersion, which is useful as a coating for building materials.

In the present invention, the "polymer solution obtained by dissolving the fluorine-containing polymer (A) in the monomer (b) having an ethylenically unsaturated group" encompasses the case of the fluorine-containing polymer (A) being dissolved in a single molecular form, the case of a plurality of molecules being aggregated and being dissolved or finely dispersed in such an aggregated form, the case of a plurality of molecules being aggregated and partly being dissolved or partly being swelled in such an aggregated form, and the case of the fluorine-containing polymer being dissolved in the monomer having an ethylenically unsaturated group through a compatibilizing agent. However the case of the polymer solution substantially containing a polymer in the form of particles like seed polymerization is not encompassed. It may be said in another aspect that a fluorine-containing polymer can move freely in a monomer as a solvent.

### BEST MODE FOR CARRYING OUT THE INVENTION

In the preparation process of the present invention, the polymer solution obtained by dissolving the fluorine-containing polymer (A) in the monomer (b) having an ethylenically unsaturated group is subjected to emulsion polymerization.

In conventional seed polymerization methods, a monomer having an ethylenically unsaturated group is subjected to emulsion polymerization in the presence of fluorine-containing polymer particles. However a monomer having an ethylenically unsaturated group partly penetrates into the fluorine-containing polymer particles (so-called swelling), but does not dissolve the fluorine-containing polymer. The conventional seed polymerization methods basically differ in this point from the preparation process of the present invention. In the present invention, the fluorine-containing polymer (A) should be dissolved in the monomer (b) consequently. When mixing to the monomer (b), the fluorine-containing polymer (A) may be in the form of granule, pellet, fine powder, resin or solution.

The fluorine-containing polymer (A) usable in the present invention may be any of fluorine-containing polymers having functional group (including an ethylenically unsaturated group as explained infra, hereinafter the same) and fluorine-containing polymers having no functional group. Those are explained below.

### (A1) Fluorine-containing polymers having no functional group

### (A 1-1) Fluoroolefin polymers

Examples of fluoroolefin are, for instance, at least one kind of tetrafluoroethylene (TFE), trifluoroethylene (TrFE), chlorotrifluoroethylene (CTFE), hexafluoropropylene (HFP), perfluoro(alkyl vinyl ether) (PAVE), vinyl fluoride (VF) and vinylidene fluoride (VdF).

Examples of the polymers are as follows.

### (A1-1-1) TFE polymers

Examples are PTFE, TFE/HFP copolymer, TFE/PAVE copolymer, TFE/ethylene copolymer, TFE/vinyl ether copolymer, TFE/vinyl ester copolymer, TFE/vinyl ester/vinyl ether copolymer and TFE/vinyl ether/allyl ether copolymer. Among them, TFE/ethylene copolymer, TFE/vinyl ether copolymer, TFE/vinyl ester copolymer, TFE/vinyl ester/vinyl ether copolymer and TFE/vinyl ether/allyl ether copolymer are preferable from the viewpoint of good mixing to the monomer having an ethylenically unsaturated group.

### (A1-1-2) CTFE polymers

Examples are PCTFE, CTFE/HFP copolymer, CTFE/PAVE copolymer, CTFE/ethylene copolymer, CTFE/vinyl ether copolymer, CTFE/vinyl ester copolymer, CTFE/vinyl ester/vinyl ether copolymer and CTFE/vinyl ether/allyl ether copolymer. Among them, CTFE/ethylene copolymer, CTFE/vinyl ether copolymer, CTFE/vinyl ester copolymer, CTFE/vinyl ester/vinyl ether copolymer and CTFE/vinyl ether/allyl ether copolymer are preferable from the viewpoint of good mixing to the monomer having an ethylenically unsaturated group.

### (A1-1-3) VdF polymers

Examples are PVdF polymer, VdF/TFE copolymer, VdF/HFP copolymer, VdF/TFE/HFP copolymer, VdF/CTFE copolymer, VdF/TFE/PAVE copolymer, VdF/CTFE/TFE copolymer and VdF/CTFE/HFP copolymer. In these polymers, it is preferable that VdF is contained in the polymer in an amount of not less than 50 % by mole, from the viewpoint of good mixing to the monomer having an ethylenically unsaturated group.

### (A1-2) Fluorinated acrylic polymers

Examples are polymers having a α-fluoroacrylate unit or fluoromethacrylate.

Examples of α-fluoroacrylate are, for instance, CH₂=CFCOOCH₂CF₂CF₂H (4FFA), CH₂=CFCOOCH₂CF₂CF₃ (5FFA), CH₂=CFCOOCH₂(CF₂)₃CF₂H (8FFA), CH₂=CFCOOCH₂(CF₂)₅CF₂H (12FFA) and the like; and examples of fluoromethacrylate are, for instance, CH₂=C(CH₃)COOCH₂CF₃ (3FMA), CH₂=C(CH₃)COOCH₂CF₂CF₂H (4FMA), CH₂=C(CH₃)COOCH₂CF₂CF₃ (5FMA), CH₂=C(CH₃)COOCH₂(CF₂)₂CF₃ (7FMA), CH₂=C(CH₃)COOCH₂(CF₂)₃CF₂H (8FMA) and the like.

### (A2) Fluorine-containing polymers having functional group

Examples are polymers comprising a monomer having hydroxyl group, a monomer having carboxylic acid residue, organosilicate compound having reactive a,β-unsaturated group or the like as a monomer having functional group.

Examples of a monomer having hydroxyl group are, for instance, hydroxyalkyl vinyl ether and hydroxyalkyl allyl ether represented by the formula (I):

CH₂=CHR¹ (I)

wherein R¹ is -OR² or -CH₂OR², where R² is an alkyl group having hydroxyl group. Examples of R² are linear or branched alkyl groups having 1 to 8 carbon atoms, in which 1 to 3 hydroxyl groups are bonded, and preferably one hydroxyl group is bonded. Examples thereof are 2-hydroxyethyl vinyl ether, 3-hydroxypropyl vinyl ether, 2-hydroxypropyl vinyl ether, 2-hydroxy-2-methylpropyl vinyl ether, 4-hydroxybutyl vinyl ether, 4-hydroxy-2-methylbutyl vinyl ether, 5-hydroxypentyl vinyl ether, 6-hydroxyhexyl vinyl ether, 2-hydroxyethyl allyl ether, 4-hydroxybutyl allyl ether and glycerol monoallyl ether.

Examples of a monomer having carboxylic acid residue are unsaturated carboxylic acids such as unsaturated monocarboxylic acids, unsaturated dicarboxylic acids, and monoesters and acid anhydrides thereof represented by the formula (II): 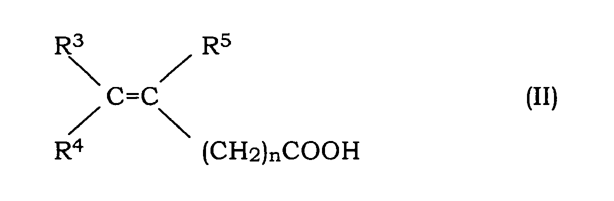 wherein R³, R⁴ and R⁵ are the same or different and each is a hydrogen atom, an alkyl group, a carboxyl group or an ester group; n is 0 or 1; or vinyl ether monomers having a carboxylic acid residue represented by the formula (III): 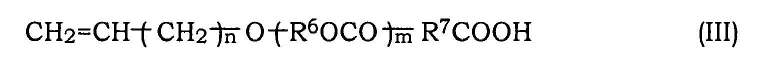 wherein R⁶ and R⁷ are the same or different and each is a saturated or unsaturated linear or cyclic alkylene group; n is 0 or 1; m is 0 or 1.

Examples of the unsaturated carboxylic acids of the formula (II) are, for instance, acrylic acid, methacrylic acid, vinylacetic acid, crotonic acid, cinnamic acid, 3-allyloxypropionic acid, 3-(2-allyloxyethoxycarbonyl)propionic acid, itaconic acid, itaconic acid monoester, maleic acid, maleic acid monoester, maleic anhydride, fumaric acid, fumaric acid monoester, vinyl phthalate and vinyl pyromellitate.

Examples of the vinyl ether monomer having a carboxylic acid residue of the formula (III) are, for instance, one or more kinds of 3-(2-allyloxyethoxycarbonyl)propionic acid, 3-(2-allyloxybuthoxycarbonyl)propionic acid, 3-(2-vinyloxyethoxycarbonyl)propionic acid and 3-(2-vinyloxybuthoxycarbonyl)propionic acid.

Also there are exemplified, as a monomer having a carboxylic acid residue, those obtained by acting a dibasic acid anhydride on the above-mentioned fluorine-containing polymer having hydroxyl group.

Examples of the hydrolyzable silyl group contained in the organosilicon compound having a reactive α,β-unsaturated group which is used in the present invention are groups represented by the formula:

Xₙ(R⁸)₃₋ₙSi-

wherein X is a hydrolyzable group or an element; R⁸ is a hydrogen atom or an aralkyl group, aryl group or alkyl group having 1 to 10 carbon atoms; n is an integer of 1 to 3.

The above-mentioned hydrolyzable group encompasses halogen element, alkoxyl group, acyloxyl group, ketoximate group, amide group, acid amide group, aminoxy group, mercapto group and alkenyloxy group. From the viewpoint of handling property of a coating and reaction speed and from the point that odor and corrosive substances are not generated, it is preferable to use the silyl group having alkoxyl group.

The number of carbon atoms of alkoxyl group is preferably 1 to 10, further preferably 1 to 5, and preferable are, for instance, a methoxy group, an ethoxy group, a propoxy group, a butoxy group and a pentoxy group from the viewpoint of crosslinking reaction speed.

Examples of a monomer having a hydrolyzable silyl group and being copolymerizable with a vinyl monomer are vinyltrimethoxysilane, vinyltriethoxysilane, vinyltripropoxysilane, vinylmethyldiethoxysilane, vinyltris(β-methoxyethoxy) silane, allyltrimethoxysilane, trimethoxysilylethylvinylether, triethoxysilylethylvinylether, methyldimethoxysilylethylvinylether, triethoxysilylpropylvinylether, methyldimethoxysilylpropylvinylether, γ-(meth)acryloyloxypropyltrimethoxysilane, γ-(meth)acryloyloxypropyltriethoxysilane and γ-(meth)acryloyloxypropylmethyldimethoxysilane.

A process for preparing the fluorine-containing polymer (A) is not limited particularly, and an emulsion polymerization method, a suspension polymerization method, a solution polymerization method, a bulk polymerization method and a mini-emulsion polymerization method can be employed. Also known polymerization conditions can be adopted. In the present invention, since the polymer is dissolved in the monomer, the form (for example, particle size) of the polymerization product is not a problem.

A number average molecular weight of the fluorine-containing polymer (A) is preferably not more than 1,000,000, further preferably not more than 200,000, especially preferably not more than 100,000 from the viewpoint of solution polymerizability, and is preferably not less than 1,000, further preferably not less than 4,000, especially preferably not less than 5,000 from the viewpoint of excellent weather resistance and durability.

In the present invention, this fluorine-containing polymer (A) is dissolved in the monomer (b) having an ethylenically unsaturated group to make a fluorine-containing polymer solution. Accordingly, it is necessary that the monomer (b) having an ethylenically unsaturated group is one dissolving the fluorine-containing polymer (A).

The monomer (b) having an ethylenically unsaturated group may be one having various characteristics.

For example, in order to enhance weather resistance, chemical resistance, adhesion and gloss, lower alkyl esters of (meth)acrylic acid are preferable, and for further enhancing weather resistance, monomers having an ethylenically unsaturated group and containing an alkyl group having 4 to 10 carbon atoms are suitable.

In addition, in order to impart water solubility and dispersibility in water to the fluorine-containing composite polymer, ethylenically unsaturated group-containing monomers having a carboxyl group and/or a sulfonic acid group may be used, and in order to impart characteristics such as adhesion and dispersibility of a pigment, ethylenically unsaturated group-containing monomers having a carboxyl group, an amino group, an amide group or an epoxy group may be used. In addition, in order to impart crosslinkability, ethylenically unsaturated group-containing monomers having, for example, a hydroxyl group, a carboxyl group, a carbonyl group or an amino group may be used.

It is especially preferable that the monomer (b) is a monomer mixture comprising at least one kind each of monomers having crosslinkable functional group and acrylic or methacrylic monomers containing an alkyl group having 4 to 10 carbon atoms.

Examples are, for instance, one or more kinds of lower alkyl esters of (meth)acrylic acids such as methyl acrylate, n-butyl acrylate, methyl methacrylate, ethyl methacrylate and n-butyl methacrylate; alkyl esters of (meth)acrylic acids having 4 to 10 carbon atoms such as 2-ethylhexyl acrylate, 2-ethylhexyl methacrylate, cyclohexyl acrylate and cyclohexyl methacrylate; unsaturated carboxylic acids such as acrylic acid, methacrylic acid, maleic acid and crotonic acid; amide compounds such as acrylamide, methacrylamide, N-methyl acrylamide, N-methylol acrylamide, N-butoxymethyl acrylamide, N-methylol methacrylamide, N-methyl methacrylamide and N-butoxymethyl methacrylamide; hydroxyl-containing monomers such as hydroxyethyl acrylate, hydroxyethyl methacrylate, hydroxypropyl acrylate and hydroxypropyl methacrylate; epoxy-containing monomers such as glycidyl acrylate and glycidyl methacrylate; siloxane-containing monomers such as y-trimethoxysilane methacrylate and γ-triethoxysilane methacrylate; aldehyde group-containing monomers such as acrolein.

Among these, (meth)acrylic monomers are preferable from the viewpoint of high polymerizability and from the viewpoint that there are many kinds of monomers available on the market.

The fluorine-containing polymer (A) may be dissolved in the monomer (b) by means of usual method. There can be employed, for example, a method of adding the fluorine-containing polymer (A) to the monomer (b) or a method of adding the monomer (b) to the fluorine-containing polymer (A). When the polymer does not dissolve at normal temperature, heating may be carried out or a compatibilizing agent may be used.

The concentration of the fluorine-containing polymer (A) in the fluorine-containing polymer solution may be optionally selected depending on performance of a coating film (weather resistance, durability, chemical resistance), and is usually not less than 1 % by mass, preferably not less than 2 % by mass, further preferably not less than 3 % by mass, from the viewpoint of good weather resistance and durability. An upper limit thereof is 90 % by mass, preferably 80 % by mass, further preferably 70 % by mass from the viewpoint of polymerization stability, gloss and adhesion.

In the present invention, this fluorine-containing polymer solution is subjected to emulsion polymerization. Emulsion polymerization may be carried out by the following method under the following conditions.

Namely, an emulsifying agent and water are added to the fluorine-containing polymer solution, and the solution is formed into a pre-emulsified aqueous dispersion by a mechanical emulsifying method. This pre-emulsified aqueous dispersion can be formed into a mini-emulsion by shearing with a powerful energy applying means such as ultrasonic wave, colloid mill or high pressure homogenizer. The polymerization is conducted using a polymerization initiator after this emulsifying stage. A non-reactive emulsifying agent, a reactive emulsifying agent or a combination thereof can be used as an emulsifying agent. The polymerization is carried out by an optional method generally used in emulsion polymerization, namely a batch type, semi-continuous type or continuous type polymerization method.

A polymerization temperature is preferably about 20°C to about 100°C, especially preferably about 40°C to about 90°C.

Examples of usable polymerization initiator are, for instance, diacyl peroxides such as octanoyl peroxide, acetyl peroxide and benzoyl peroxide; dialkoxycarbonyl peroxides such as isopropoxycarbonyl peroxide and tert-butoxycarbonyl peroxide; ketone peroxides such as methyl ethyl ketone peroxide and cyclohexanone peroxide; hydroperoxides such as hydrogen peroxide, tert-butyl hydroperoxide and cumene hydroperoxide; dialkyl peroxides such as di-tert-butyl peroxide and dicumyl peroxide; alkyl peroxy esters such as tert-butylperoxy acetate and tert-butylperoxy pivalate; persulfates such as ammonium persulfate and potassium persulfate (further a reducing agent such as sodium hydrogensulfite, sodium bisulfite, cobalt naphthenate or dimethyl aniline can be used together); redox polymerization initiators comprising an oxidizing agent (for example, ammonium peroxide and potassium peroxide), a reducing agent (for example, sodium sulfite) and a transition metal salt (for example, iron sulfate); azo compounds such as 2,2'-azobis isobutyronitrile, 2,2'-azobis(2,4-dimethylvaleronitrile), 2,2'-azobis(2-methylvaleronitrile), 2,2'-azobis(2-cyclopropylpropionitrile), dimethyl 2,2'-azobis(isobutyrate), 2,2'-azobis[2-(hydroxymethyl) propionitrile] and 4,4'-azobis(4-cyanopentenoic acid).

With respect to the emulsifying agent, an anionic emulsifying agent, a nonionic emulsifying agent, a combination of an anionic emulsifying agent and a nonionic emulsifying agent and as case demands, an ampholytic emulsifying agent or a cationic emulsifying agent can be used.

Examples of the nonionic emulsifying agent are, for instance, polyoxyethylene alkyl ethers such as polyoxyethylene lauryl ether and polyoxyethylene stearyl ether; for instance, polyoxyethylene alkyl phenyl ethers such as polyoxyethylene octyl phenyl ether and polyoxyethylene nonyl phenyl ether; for instance, sorbitan higher fatty acid esters such as sorbitan monolaurate, sorbitan monostearate and sorbitan trioleate; for instance, polyoxyethylene sorbitan higher fatty acid esters such as polyoxyethylene sorbitan monolaurate; for instance, polyoxyethylene higher fatty acid esters such as polyoxyethylene monolaurate and polyoxyethylene monostearate; for instance, glycerin higher fatty acid esters such as oleic acid monoglyceride and stearic acid monoglyceride; and, for instance, polyoxyethylene/polyoxypropylene block copolymer.

Examples of the anionic emulsifying agent are, for instance, higher fatty acid salts such as sodium oleate; for instance, alkylallylsulfonates such as sodium dodecylbenzenesulfonate; for instance, alkyl sulfates such as sodium lauryl sulfate; for instance, polyoxyethylene alkyl ether sulfates such as sodium polyoxyethylene lauryl ether sulfate; for instance, polyoxyethylene alkyl allyl ether sulfates such as sodium polyoxyethylene nonyl phenyl ether sulfate; for instance, alkyl sulfosuccinates such as sodium monooctylsulfosuccinate, sodium dioctylsulfosuccinate and sodium polyoxyethylene lauryl sulfosuccinate; and derivatives thereof.

Especially in the case where the concentration of the fluorine-containing polymer (A) in the fluorine-containing polymer solution is high, a reactive emulsifying agent may be used alone or may be used in combination with a non-reactive emulsifying agent. The reactive emulsifying agent is not limited particularly to an anionic emulsifying agent or a nonionic emulsifying agent. For example, emulsifying agents having a radically polymerizable unsaturated group such as a (meth)allyl group, a (meth)acryl group or a styryl group can be used alone or can be used in combination of two or more kinds thereof.

Examples of such a reactive anionic emulsifying agent are, for instance, reactive emulsifying agents represented by the formulas (1), (2), (3), (4) and (5). 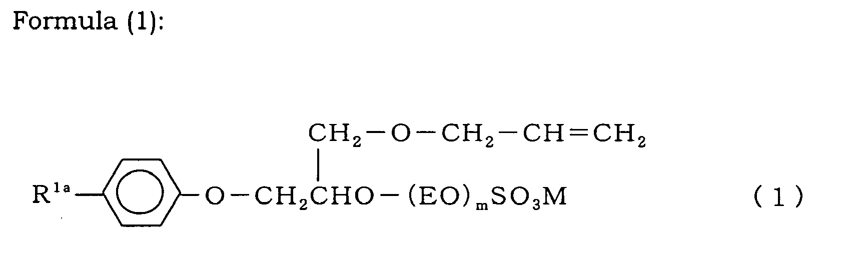 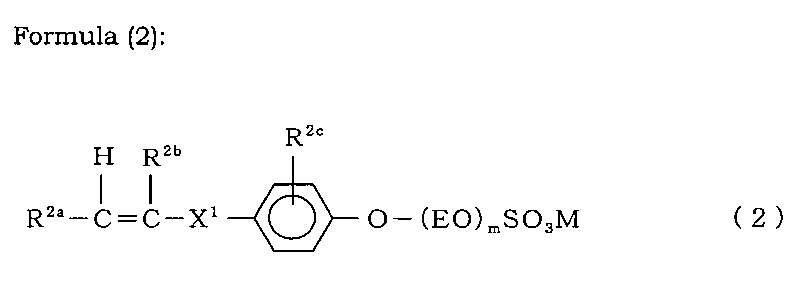 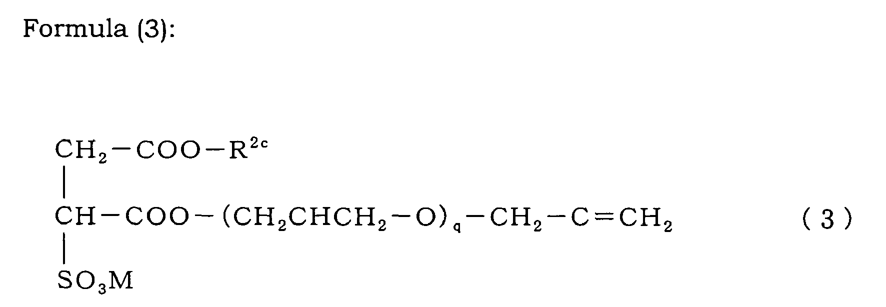 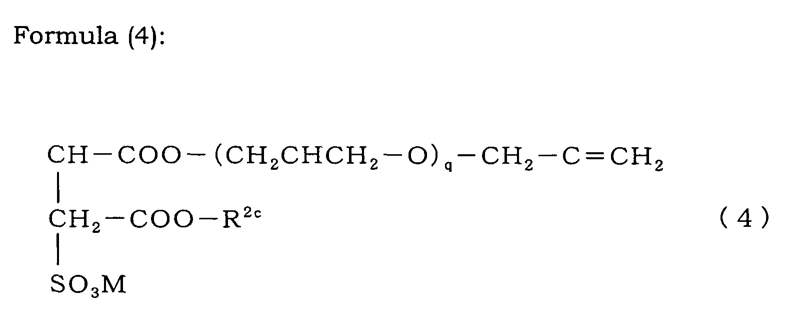 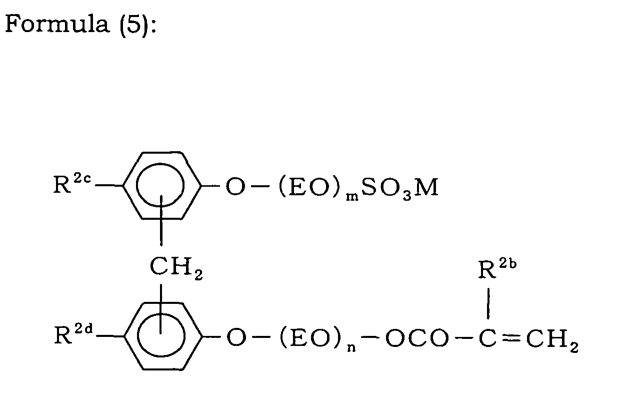 wherein R^{1a} is a linear or branched alkyl group having 1 to 12 carbon atoms; R^{2a} is a hydrogen atom or methyl; R^{2b} is a hydrogen atom or methyl; R^{2c} is a hydrogen atom or an aralkyl group, an aryl group, an alkenyl group or an alkyl group having 1 to 18 carbon atoms; R^{2d} is a hydrogen atom or an aralkyl group, an aryl group, an alkenyl group or an alkyl group having 1 to 18 carbon atoms; X¹ is a single bond or a methylene group; EO is an ethylene oxide unit; n is an integer of 1 to 50; m is an integer of 1 to 50; q is 0 or 1.

Examples of the reactive anionic emulsifying agent represented by the above-mentioned formula (1) are, for instance, ADEKA REASOAP SE-10N, ADEKA REASOAP SE-20N and ADEKA REASOAP SE-30N (all available from ASAHI DENKA CO., LTD.). Examples of the reactive anionic emulsifying agent represented by the above-mentioned formula (2) are, for instance, AQUARON HS-05, AQUARON HS-10, AQUARON HS-20 and AQUARON HS-30 (all available from DAI-ICHI KOGYO SEIYAKU KABUSHIKI KAISHA). Examples of the reactive anionic emulsifying agent represented by the above-mentioned formula (4) are, for instance, LATEMUL S-120, LATEMUL S-120A, LATEMUL S-180 and LATEMUL S-180A (all available from KAO CORPORATION), and ELEMINOL JS-2 (available from SANYO KASEI KOGYO KABUSHIKI KAISHA). Examples of the reactive anionic emulsifying agent represented by the above-mentioned formula (5) are, for instance, ANTOX MS-60 (available from NIPPON NYUKAZAI CO., LTD.) and the like.

Examples of other reactive anionic emulsifying agents are reactive emulsifying agents of alkyl alkenyl succinate, for instance, LATEMUL ASK (available from KAO CORPORATION); reactive emulsifying agents of sulfates of polyoxyalkylene (meth)acrylate, for example, ELEMINOL RS-30 (available from SANYO KASEI KOGYO KABUSHIKI KAISHA); reactive emulsifying agents of polyoxyalkylene alkyl ether aliphatic unsaturated dicarboxylate, for example, RA-1120 and RA-2614 (all available from NIPPON NYUKAZAI CO., LTD.); reactive emulsifying agents of sulfoalkyl (meth)acrylate, for example, ANTOX MS-2N (available from NIPPON NYUKAZAI CO., LTD.); reactive emulsifying agents of sulfate of phthalic acid dihydroxyalkyl (meth)acrylate; and reactive emulsifying agents of phosphoric acid ester salt of mono- or di(glycerol-1-alkylphenyl-3-allyl-2-polyoxyalkylene ether), for example, H-3330PL (available from DAI-ICHI KOGYO SEIYAKU KABUSHIKI KAISHA).

Examples of a reactive nonionic emulsifying agent usable in the present invention are, for instance, the reactive emulsifying agents represented by the formulas (6) and (7). 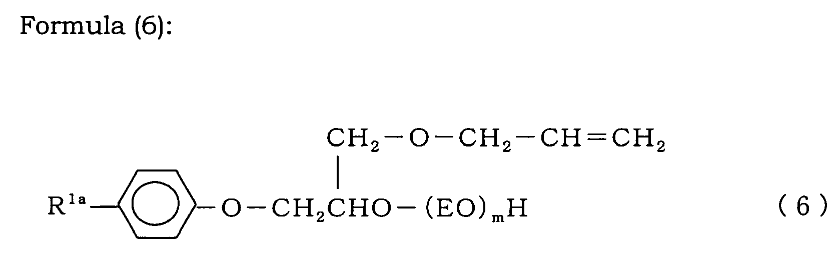 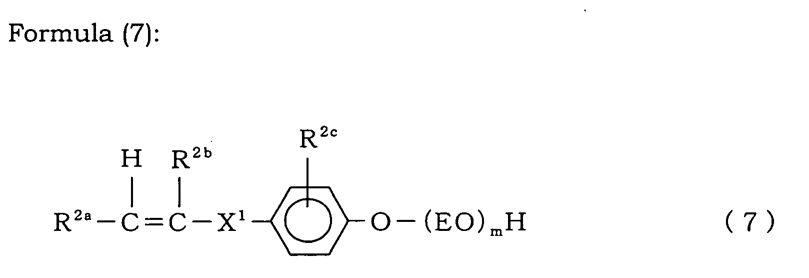 wherein R^{1a}, R^{2a}, R^{2b}, R^{2c}, X¹, EO and m are as defined above.

Examples of the reactive nonionic emulsifying agent represented by the above-mentioned formula (6) are, for instance, ADEKA REASOAP NE-10, ADEKA REASOAP NE-20 and ADEKA REASOAP NE-30 (all available from ASAHI DENKA CO., LTD.). Examples of the reactive nonionic emulsifying agent represented by the above-mentioned formula (7) are, for instance, AQUARON RN-10, AQUARON RN-20, AQUARON RN-30 and AQUARON RN-50 (all available from DAI-ICHI KOGYO SEIYAKU KABUSHIKI KAISHA).

Examples of other reactive nonionic emulsifying agents are reactive emulsifying agents of polyoxyalkylene alkyl phenyl ether (meth)acrylate, for example, RMA-564 and RMA-568 (all available from NIPPON NYUKAZAI CO., LTD.); and reactive emulsifying agents of polyoxyalkylene alkyl phenyl ether (meth)acrylate, for example, RMA-1114 (available from NIPPON NYUKAZAI CO., LTD.).

An amount of the emulsifying agent is not less than 0.1 part by mass, preferably not less than 0.2 part by mass based on 100 parts by mass of the polymer solution obtained by dissolving the fluorine-containing polymer (A) in the monomer (b) containing an ethylenically unsaturated group. An upper limit thereof is preferably 30 parts by mass, further preferably 20 parts by mass from the viewpoint of weather resistance, water resistance and stability of emulsion polymerization.

When using a reactive emulsifying agent together, its amount is preferably not more than 90 % by mass, further preferably not more than 85 % by mass, especially preferably not more than 80 % by mass based on the whole emulsifying agents since the polymerization reaction can be continued smoothly though it varies depending on kind of a non-reactive emulsifying agent, kind and amount of the fluorine-containing polymer (A), and kind and amount of the monomer (b) containing an ethylenically unsaturated group. As a matter of course, a reactive emulsifying agent may not be used or the whole emulsifying agents may be reactive emulsifying agents.

In the present invention, for the emulsion polymerization of the aqueous dispersion of an acrylic copolymer, a water soluble protective colloid may be used together with the above-mentioned reactive emulsifying agent and the above-mentioned non-reactive anionic and nonionic emulsifying agents within a range not giving an adverse effect on performances of the obtained aqueous dispersion of a copolymer.

Examples of the above-mentioned water soluble protective colloid are, for instance, polyvinyl alcohols such as partially saponified polyvinyl alcohol, completely saponified polyvinyl alcohol and modified polyvinyl alcohol; for example, cellulose derivatives such as hydroxyethyl cellulose, hydroxypropyl cellulose and salt of carboxymethyl cellulose; and natural polysaccharides such as guar gum. These may be used alone or may be used in combination thereof.

For the emulsion polymerization, a reducing agent can be used together with a polymerization initiator if desired. Examples of such a reducing agent are, for instance, reducing organic compounds such as ascorbic acid, tartaric acid, citric acid, glucose and metal sulfoxylate of formaldehyde; and reducing inorganic compounds such as sodium thiosulfate, sodium sulfite, sodium bisulfite and sodium metabisulfite. An amount of these reducing agents is preferably about 0.1 part by mass to about 1 part by mass based on 100 parts by mass of the monomer having an unsaturated group.

Further for the emulsion polymerization, a chain transfer agent can be used. Examples of the chain transfer agent are, for instance, n-dodecyl mercaptan, t-dodecyl mercaptan, n-butyl mercaptan, 2-ethylhexyl thioglycolate, 2-mercaptoethanol and trichlorobromomethane. An amount of these chain transfer agents is preferably 0 to about 1 part by mass based on 100 parts by mass of the whole monomers having an unsaturated group.

In the thus obtained aqueous dispersion, fluorine-containing composite polymer particles comprising the fluorine-containing polymer (A) and the ethylenic polymer (B) obtained by polymerizing the monomer (b) containing an ethylenically unsaturated group are present.

In these fluorine-containing composite polymer particles, the fluorine content of the particle surface is not less than 1.1 times the theoretical fluorine content or more. It is conjectured that this is because in the emulsion polymerization, as the polymerization of the monomer (b) containing an ethylenically unsaturated group proceeds, the dissolved fluorine-containing polymer (A) moves toward the surface of droplets of the polymer solution and the polymerization is completed with the polymer (A) being transferred to the surface of droplets of the polymer solution. This phenomenon is that resins which are inherently excellent in compatibility with each other do not exist homogeneously in the solution. This phenomenon is beyond conventional expectation and has been found out for the first time by the present inventors.

A ratio of the fluorine content on the particle surface to the theoretical fluorine content can be controlled, for example, by selecting kinds of the fluorine-containing polymer and the monomer containing an ethylenically unsaturated group. The ratio of the fluorine content on the particle surface to the theoretical fluorine content is preferably not less than 1.15, further preferably not less than 1.2 from the viewpoint of durability and weather resistance. An upper limit of the ratio is about 20.

The fluorine content on the particle surface can be measured by electron spectroscopy for chemical analysis (ESCA).

The number average particle size of the fluorine-containing composite polymer particles is not limited particularly, and the particles having a number average particle size of not more than 500 nm, further not more than 400 nm, especially not more than 300 nm can be obtained. The lower limit of the particle size is about 10 nm.

The aqueous dispersion of the fluorine-containing composite polymer particles prepared by the preparation process of the present invention can be used in various forms for various applications.

The aqueous dispersion can be used, for example, as a coating film forming component of various coating compositions, a film or sheet molding material and in addition, an adhesive composition and an ink composition, but its application is not limited to them.

Examples of the coating compositions are weather resistant coating compositions, especially weather resistant coating compositions for building, coating compositions for interior and exterior of automobiles, coating compositions for interior and exterior of electric appliances, and coating compositions for office equipment and kitchen utensils. The aqueous dispersion can be used advantageously as a weather resistant coating composition for building especially from the viewpoint of good weather resistance and durability.

Examples of a weather resistant coating composition are, for instance, clear coating compositions and coating compositions containing various pigments. Examples of additives which may be blended to the coating composition are a curing agent, and in addition, a surfactant, a pigment, a dispersant, a thickener, a preservative, an ultraviolet absorber, a defoaming agent and a leveling agent.

When the fluorine-containing polymer (A) is prepared by a suspension polymerization method, a solution polymerization method, a bulk polymerization method or the like which does not use an emulsifying agent, an amount of the emulsifying agent in the finally obtained fluorine-containing composite polymer particles and further in the coating film can be decreased, which is advantageous for uses for a coating used outside, for example, a heat-shielding coating, from the point that flowing out of the emulsifying agent due to rainfall after the coating hardly occurs. Even in the case where the fluorine-containing polymer (A) is prepared by an emulsion polymerization method, the same effect as mentioned above can be obtained if the emulsifying agent is removed by sufficiently washing the polymer before dissolved in the monomer (b).

A film and a sheet can be prepared by casting the aqueous dispersion of the present invention by a known casting method.

### EXAMPLES

The present invention is then explained by means of examples, and the present invention is not limited to them.

Measuring methods employed in the present invention are as explained below.

### (1) Surface analysis (fluorine content of surface)

An analysis is made according to electron spectroscopy for chemical analysis (ESCA).

### (2) Number average particle size

The number average particle size is measured with a particle size meter by laser beam scattering method (ELS-3000 (brand name) available from OTSUKA DENSHI KABUSHIKI KAISHA).

### (3) Weather resistance test

2,000-hour accelerated weather resistance test is carried out with a Sunshine Weather-o-meter (available from Suga Test Instruments Co., Ltd.).

A specular gloss at an angle of 60 degrees is measured according to JIS K5400-6.7 with a gloss meter (available from Suga Test Instruments Co., Ltd.) and then weather resistance is evaluated by a gloss retention ratio (%).

### EXAMPLE 1

Into a 1-liter polyethylene vessel were poured 16 g of a fluorine-containing resin (vinylidene fluoride/tetrafluoroethylene/chlorotrifluoroethylene copolymer) prepared by an emulsion polymerization method, 44.8 g of methyl methacrylate, 18.56 g of butyl acrylate and 0.64 g of acrylic acid, and the mixture was sufficiently mixed to prepare a fluorine-containing polymer solution (concentration of polymer: 20 % by mass).

Then 4.44 g of a sulfate of bis(polyoxyethylene polycyclic phenyl ether)methacrylate as a reactive emulsifying agent and 119.8 g of water were added thereto and an emulsion was prepared with an emulsifier.

The whole amount of this emulsion, 2.4 g of methylpolyglycol methacrylate and 30.3 g of water were pored into a 0.5 liter separable glass flask, and the inside of the flask was replaced by nitrogen with stirring and was heated up to 80°C. Thereto was added 9.6 g of ammonium persulfate (1 % aqueous solution) to initiate a reaction. When two and a half hours had elapsed after the initiation of the reaction, the reaction solution was cooled to room temperature to terminate the reaction and obtain an aqueous dispersion (yield: 246.54 g, concentration: 30.4 % by mass).

With respect to the fluorine-containing composite polymer particles in this aqueous dispersion, theoretical fluorine content was calculated, a number average particle size thereof was determined, and a surface analysis (fluorine content of the surface) was carried out. The results are shown in Table 1.

Further a weather resistant coating composition (white coating composition) for building material was prepared according to the following formulations.

| | |
|---|---|
| Aqueous dispersion | 235 parts by mass |
| Titanium oxide | 50 parts by mass |
| (brand name TIPAQUE CR-97 available from ISHIHARA SANGYO KAISHA LTD.) | |
| Pigment dispersing agent | 2 parts by mass |
| (NOPCOSPERSE SN-5027 available from SAN NOPCO LIMITED) | |
| Anti-freezing agent (ethylene glycol) | 1 part by mass |
| Defoaming agent | 0.5 part by mass |
| (FS ANTIFOAM 013B available from Dow Corning Corp.) | |
| Thickener | 0.5 part by mass |
| (ADEKANOL UH-420 available from ASAHI DENKA CO., LTD.) | |
| Film forming auxiliary | 10 parts by mass |
| (TEXANOL available from EASTMAN CHEMICAL CO., LTD.) | |

A primer (MOWINYL DM-772 (brand name) available from CLARIANT POLYMER CO., LTD.) was coated on an aluminum sheet with an applicator to give a coating thickness of 40 µm, followed by drying at room temperature for one day. Then the above white coating composition was coated on the primer with an applicator to give a coating thickness of 40 µm, followed by allowing to stand for drying at room temperature for seven days to form a coating film. Weather resistance was evaluated. The results are shown in Table 1.

### EXAMPLE 2

Into a 1-liter polyethylene vessel were poured 6 g of a fluorine-containing resin (vinylidene fluoride/tetrafluoroethylene/chlorotrifluoroethylene copolymer) prepared by a suspension polymerization method, 163.8 g of methyl methacrylate, 67.86 g of butyl acrylate and 2.34 g of acrylic acid, and the mixture was sufficiently mixed to prepare a fluorine-containing polymer solution (concentration of polymer: 2.5 % by mass).

Then 16 g of polyoxyethylene polycyclic phenyl ether sulfate (30 % by mass aqueous solution) and 11.7 g of ammonium persulfate (10 % by mass aqueous solution) as reactive emulsifying agents and 94.02 g of water were added thereto and an emulsion was prepared with an emulsifier.

Into a 1-liter separable glass flask was poured 130.2 g of water, and the inside of the flask was replaced by nitrogen with stirring and was heated up to 80°C. Thereto was added dropwise the emulsion to initiate a polymerization reaction. In two hours after the initiation of the polymerization, the addition of the emulsion was completed (total amount of the emulsion: 361.72 g). After completion of the addition of the emulsion, the polymerization was further continued at 80°C, and two hours after, the reaction solution was cooled to room temperature to terminate the reaction and obtain an aqueous dispersion (yield: 491.94 g, concentration: 49.8 % by mass).

With respect to the fluorine-containing composite polymer particles in this aqueous dispersion, theoretical fluorine content was calculated, a number average particle size thereof was determined, and a surface analysis (fluorine content of the surface) was carried out. The results are shown in Table 1.

Further a weather resistant coating composition (white coating composition) for building material was prepared according to the following formulations.

| | |
|---|---|
| Aqueous dispersion | 144 parts by mass |
| Titanium oxide | 50 parts by mass |
| (brand name TIPAQUE CR-97 available from ISHIHARA SANGYO KAISHA LTD.) | |
| Pigment dispersing agent | 2 parts by mass |
| (NOPCOSPERSE SN-5027 available from SAN NOPCO LIMITED) | |
| Anti-freezing agent (ethylene glycol) | 1 part by mass |
| Defoaming agent | 0.5 part by mass |
| (FS ANTIFOAM 013B available from Dow Corning Corp.) | |
| Thickener | 0.5 part by mass |
| (ADEKANOL UH-420 available from ASAHI DENKA CO., LTD.) | |
| Film forming auxiliary | 10 parts by mass |
| (TEXANOL available from EASTMAN CHEMICAL CO., LTD.) | |

A primer (MOWINYL DM-772 (brand name) available from CLARIANT POLYMER CO., LTD.) was coated on an aluminum sheet with an applicator to give a coating thickness of 40 µm, followed by drying at room temperature for one day. Then the above white coating composition was coated on the primer with an applicator to give a coating thickness of 40 µm, followed by allowing to stand for drying at room temperature for seven days to form a coating film. Weather resistance was evaluated. The results are shown in Table 1.

**TABLE 1**

| | Example 1 | Example 2 |
|---|---|---|
| Fluorine content (% by mass) | | |
| Theoretical amount (T) | 6.0 | 1.5 |
| Surface (S) | 11.45 | 8.57 |
| S/T | 1.91 | 5.7 |
| Number average particle size (nm) | 273.3 | 250 |
| Weather resistance (gloss retention ratio (%)) | 91 | 84 |

### INDUSTRIAL APPLICABILITY

According to the present invention, excellent performances such as chemical resistance, solvent resistance, hardness of a coating film and water resistance derived from a fluorine-containing polymer can be obtained by compounding the fluorine-containing polymer in an amount smaller than that of a conventional polymer.

## Claims

1. A process for preparing an aqueous dispersion of fluorine-containing composite polymer particles, **characterized by** subjecting a polymer solution obtained by dissolving a fluorine-containing polymer (A) in a monomer (b) having an ethylenically unsaturated group to emulsion polymerization.

2. The preparation process of Claim 1, wherein said fluorine-containing polymer (A) has, as a structural unit, at least one kind of a fluoroolefin unit selected from the group consisting of a tetrafluoroethylene unit, a hexafluoropropylene unit, a chlorotrifluoroethylene unit and a vinylidene fluoride unit.

3. The preparation process of Claim 1, wherein said fluorine-containing polymer (A) has a tetrafluoroethylene unit as a structural unit.

4. The preparation process of Claim 1, wherein said fluorine-containing polymer (A) has a chlorotrifluoroethylene unit as a structural unit.

5. The preparation process of Claim 1, wherein said fluorine-containing polymer (A) has a vinylidene fluoride unit as a structural unit.

6. The preparation process of any of Claims 1 to 5, wherein said monomer (b) having an ethylenically unsaturated group comprises an acrylic monomer or a methacrylic monomer.

7. The preparation process of any of Claims 1 to 6, wherein said emulsion polymerization is carried out in the presence of an emulsifying agent at least containing a reactive emulsifying agent.

8. An aqueous dispersion obtained by the preparation process of any of Claims 1 to 7.

9. Fluorine-containing composite polymer particles comprising a fluorine-containing polymer (A) and an ethylenic polymer (B) obtained by polymerizing a monomer (b) having an ethylenically unsaturated group, wherein a fluorine content of a surface of said particles is 1.15 times the theoretical fluorine content or more.

10. The fluorine-containing composite polymer particles of Claim 9, which are contained in the aqueous dispersion obtained by the preparation process of any of Claims 1 to 7.

11. An aqueous dispersion comprising the fluorine-containing composite polymer particles of Claim 9.

12. An aqueous coating composition comprising the aqueous dispersion of Claim 8 or 11.

13. The aqueous coating composition of Claim 12 which is used for a coating for a building material.
